# EUROPÄISCHE PATENTSCHRIFT

(11) **EP 1 167 991 B1**
(45) Veröffentlichungstag und Bekanntmachung des Hinweises auf die Patenterteilung: **31.03.2004**
(21) Anmeldenummer: 01115876.3
(22) Anmeldetag: 29.06.2001
(51) Int. Cl.: G01S 3/781, G01S 7/48, G01S 3/783

(54) **Verfahren und Vorrichtung zur Richtungserkennung von gepulsten Laserstrahlen nach dem Zeitintervallprinzip**
Method and apparatus for direction recognition of pulsed laser beams using the time interval principle
Méthode et dispositif pour la reconnaissance de la direction de faisceaux impulsifs de laser employant le principe d'intervalles de temps

(30) Priorität: 01.07.2000 DE 10032162
(43) Veröffentlichungstag der Anmeldung: 02.01.2002
(73) Patentinhaber: EADS Deutschland GmbH, 81663 München (DE)
(72) Erfinder: Seiffarth, Ernst-August, 82024 Taufkirchen (DE)
(74) Vertreter: Meel, Thomas

(56) Entgegenhaltungen:
- DE-A- 3 525 518
- US-A- 4 674 874
- US-A- 4 825 063
- US-A- 5 784 156

## Beschreibung

Die Erfindung betrifft ein Verfahren zur Richtungserkennung von gepulsten Laserstrahlen nach dem Zeitintervallmeßprinzip, wobei die Einfallsrichtung als Lichtlaufzeit in unterschiedlich langen Glasfasern zwischen einer Empfangsoptik und einem Detektor mittels einer digitalen Zeitintervallmeßschaltung gemessen wird und Vorrichtungen zu dessen Durchführung.

Im militärischen Bereich werden gepulste Laser zur Entfernungsbestimmung zu Zielen, Beleuchtung von Zielen, Blendung von Sensoren und Lenkung von Flugkörpern eingesetzt. Es wird meistens Strahlung in unsichtbaren, infraroten spektralen Transparenzbereichen der Atmosphäre von 0,7 -1,5 µm, 3 - 5 µm oder 8 - 12 µm verwendet. Die Pulsbreite variiert je nach Anwendung zwischen 1-200 ns, die Pulswiederholfrequenz von einigen Hertz bis in den Megahertz-Bereich.

Zur Erkennung und Lokalisierung solcher Laserstrahlquellen im Freien, die eine ernsthafte Bedrohung für militärische Ziele, vor allem Fahrzeuge, Flugzeuge und Schiffe darstellen, werden zunehmend Laserwarnsensoren mit einem hemisphärischen Auffassungsbereich eingesetzt. Die einfachste Art dieser Sensoren kann zwar die schwache einfallende Laserstrahlung gegen helle natürliche und künstliche inkohärente Strahlungsquellen detektieren, jedoch die Einfallsrichtung der Strahlung nur grob, z.B. quadrantenweise angeben. Je genauer die Richtung zur Strahlungsquelle aber bekannt ist, desto höher ist die Wahrscheinlichkeit, daß Gegenmaßnahmen, wie das gezielte Ausweichen von der lasergelenkten Waffe, eine Blendung von Sensoren der Waffe mit Störlasern oder der direkte Gegenschlag mit Waffen erfolgreich sein werden. Deshalb werden zunehmend Laserwarnsensoren verlangt, die mit einer Winkelauflösung von einigen Grad ausgestattet sind, meistens in Azimuth für bodengebundene Fahrzeuge und Schiffe, aber oft mit gleicher Genauigkeit zusätzlich in Elevation für Hubschrauber und Flugzeuge.

Die Sensoren, die am häufigsten eingesetzt werden um die Einfallsrichtung der gepulsten Strahlung zu erkennen, sind Detektorzeilen und -matritzen. Mit Hilfe einer vorgeschalteten Empfangsoptik werden hier die Achsen der verschiedenen Einfallsrichtungen den unterschiedlichen Ortskoordinaten am Sensor zugeordnet.

Bei der meist verwendeteten gepulsten Strahlung und wegen ihrer sehr kurzen Dauer im Nanosekundenbereich ergibt sich aber eine zweite Möglichkeit, die Einfallsrichtungen in Zeitinformation umzuwandeln. Nach dieser Umformung wird ein bestimmter Einfallswinkel als die Koordinate einer vorher definierten Zeitreihe identifiziert. Die Erfindung betrifft dieses letzgenannte Sensorverfahren.

In der deutschen Patentschrift DE-OS 33 23 828, "Laserwarnsensor", der deutschen Patentschrift DE 3525 518 C2 , "Einrichtung zur Erkennung und Richtungsdetektion von Laserstrahlung" und der europäischen Patentschrift EP 0283 538 B1 "Detektorvorrichtung" werden Laserwarnsensoren beschrieben, die dieses Meßprinzip der Wandlung der Richtungs- in Zeitinformation verwenden. Hier wird speziell die einfallende gepulste Laserstrahlung je nach Einfallsrichtung über unterschiedlich lange Glasfaserleitungen innerhalb des Sensorkopfes zum Detektor geleitet, d.h. der gesamte Winkelauffaßbereich des Sensors wird in ein festes Zeitintervall umgewandelt, bzw. umkodiert, dessen Länge dem größten Laufzeitunterschied der empfangenen Pulse innerhalb der Glasfaser entspricht.

In Sensoren dieser Art wird der gesamte Empfangswinkel, der z.B. einen Himmelsquadranten umfaßt, in eine Anzahl Winkelfelder mit getrennten Empfangsoptiken aufgeteilt, die jeweils ähnlich wie beim Facettenauge von Insekten einen geringen Winkelausschnitt auffassen, wobei sich benachbarte Felder teilweise überlappen. Jede Einzeloptik bündelt das einfallende Laserlicht in eine Glasfaser, die bei benachbarten Optiken unterschiedlich lang sind, aber alle an ihrem zweiten Ende zusammengefaßt und zu einem gemeinsamen Detektor geleitet werden.

Eine einfallende Laserstrahlung legt dann je nach Einfallsrichtung einen unterschiedlich langen Weg entlang der Glasfaser zum Detektor zurück, der dem Winkelunterschied der Blickrichtung der Einzelaugen entspricht. Damit die Einfallsrichtung als eine definierte Zeitspanne gemessen werden kann, muß zusätzlich ein Referenzzeitpunkt für alle Einzeloptiken gemeinsam gemessen werden.

Dies kann entweder mit Hilfe eines rundherumschauenden Detektors geschehen, der das einfallende Laserlicht ohne Zeitverzögerung unabhängig von Einfallsrichtung, wie in DE-OS 33 23 828 beschrieben wird, registriert, oder wie in Fig. 1 der DE 35 25 518 C2 dargestellt durch zusätzliche Glasfaser gleicher Länge, die zu einem zweiten Detektor führen. In der Druckschrift EP 0283 538 B1 wird die Anbringung einer dritten Glasfaser hinter jeder Einzeloptik mit einem zugehörigen dritten Detektor vorgeschlagen, die eine zusätzlich zu der Richtungsbestimmung in Azimuth auch eine solche in Elevation ermöglicht.

Die Identifikation der Einfallsrichtung erfolgt bei diesen drei Ausführungen durch Messung der Zeitspanne zwischen der Detektion des gemeinsamen Zeitpunktes des eintreffenden Laserpulse und der Detektion des zweiten von der Einfallsrichtung in Azimuth abhängigen, bzw. des dritten Pulses von der Einfallsrichtung in Elevation abhängigen Laserpulses.

Es versteht sich, daß die Genauigkeit der Winkelbestimmung von mehreren Parametern abhängt, wie der Pulsbreite der einfallenden Laserpulse, der Schnelligkeit der Detektorelemente und Vorverstärker und des Längenunterschieds der Glasfaser sowie der Auflösung und Genauigkeit der verwendeten Zeitintervallmeßschaltung. Vor allem das Verhältnis der Zeitauflösung der Zeitintervallmeßschaltung und des Laufzeitunterschiedes in den Glasfasern ist aber letzlich die bestimmende Größe für die Meßauflösung des Sensors.

In den bereits erwähnten Druckschriften wird vorgeschlagen, herkömmliche kommerziell erhältliche Zeitintervallschaltungen für die Laufzeitmessung einzusetzen.

Diese Schaltungen beruhen darauf, daß das fragliche Zeitintervall mittels eines binären Zählers und eines hochfrequenten Oszillators digitalisiert wird. Das geschieht daduch, daß der Zähler mit dem ersten, richtungsunahängigen Detektorsignal gestartet und mit dem zweiten, entsprechend der Blickrichung verzögerten Signal gestoppt wird. Die Zählrate entspricht der Taktfrequenz, die der Oszillator vorgibt. Mit einer Oszillatorfrequenz von z.B. 625 MHz beträgt die Zeitspanne zwischen zwei Zählpulsen und damit auch die kleinste Zeitauflösung von 1,6 ns, was einem Lichtweg von etwa 32 cm in einer Glasfaser entspricht.

Es ist das Ziel der Erfindung, die Ausmessung der Pulslaufzeit in den Glasfasern technisch zu verbessern, damit entweder die Richtungsauflösung bei bestehenden Oszillatorfrequenzen verbessert wird oder damit die Glasfaserlänge verkürzt werden oder die Oszillatorfrequenz bei gleichbleibender Auflösung herabgesetzt werden kann.

Zur Verbesserung der Richtungsauflösung können zwei Wege eingeschlagen werden. Entweder werden längere Lichtleiter- Verzögerungsstrecken eingesetzt oder die Taktfrequenzt des Oszillators wird erhöht. Beide Ansätze stoßen aber an technische Grenzen:

Längere Verzögerungsstrecken haben einen komplexeren und störungsempfindlicheren Aufbau zur Folge; darüberhinaus ergibt sich zwangsläufig eine Volumenvergrößerung des Sensorsystems, was für die Anwendung ungünstig ist.

Die Steigerung der Taktfrequenz ist nur bedingt möglich, da derzeitige Digitalbausteine nur ein begrenzt hohe Taktfrequenz verarbeiten können. Darüberhinaus steigt der Leistungsverbrauch bei höheren Taktfrequenzen dramatisch an und die Störanfälligkeit wird deutlich höher.

Gemäß der Erfindung werden die genannten Nachteile dadurch beseitigt, daß das richtungsabhängige Zeitintervall zuerst elektronisch um einen bekannten Faktor gestreckt wird, bevor es zur Digitalisierung weitergeleitet wird. Dadurch kann bei Beibehaltung der bisherigen Digitalisierungsschaltung und der bisherigen Verzögerungslängen die Richtungsauflösung erheblich verbessert oder bei gleicher Richtungsauflösung die Komplexität der bisherigen Systeme verringert werden. Es können also entweder kürzere Verzögerungsleitungen gewählt oder/und die Taktfrequenz zur Digitalisierung erniedrigt werden.

Einzelheiten der Erfindung ergeben sich aus den Unteransprüchen und der Beschreibung, in der anhand der Zeichnung ein Ausführungsbeispiel erörtert wird. Es zeigen
- Fig. 1: eine schematische Darstellung einer bekannten Empfangsvorrichtung für Laserstrahlung,
- Fig. 2a: das Schaltungsprinzip für das erfindungsgemäße Verfahren,,
- Fig. 2b: ein Diagramm zum erfindungsgemäßen Verfahren,
- Fig. 3: ein Diagramm zu einer vereinfachten Variante des erfindungsgemäßen Verfahrens,
- Fig. 4: eine schematische Darstellung einer Stromspiegel-Schaltung zur Durchführung des erfindungsgemäßen Verfahrens.

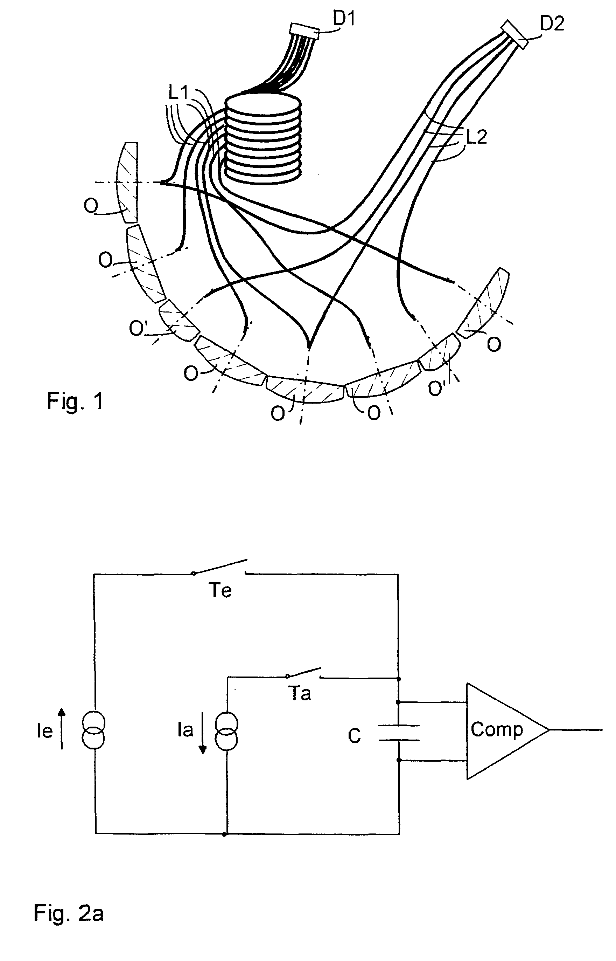

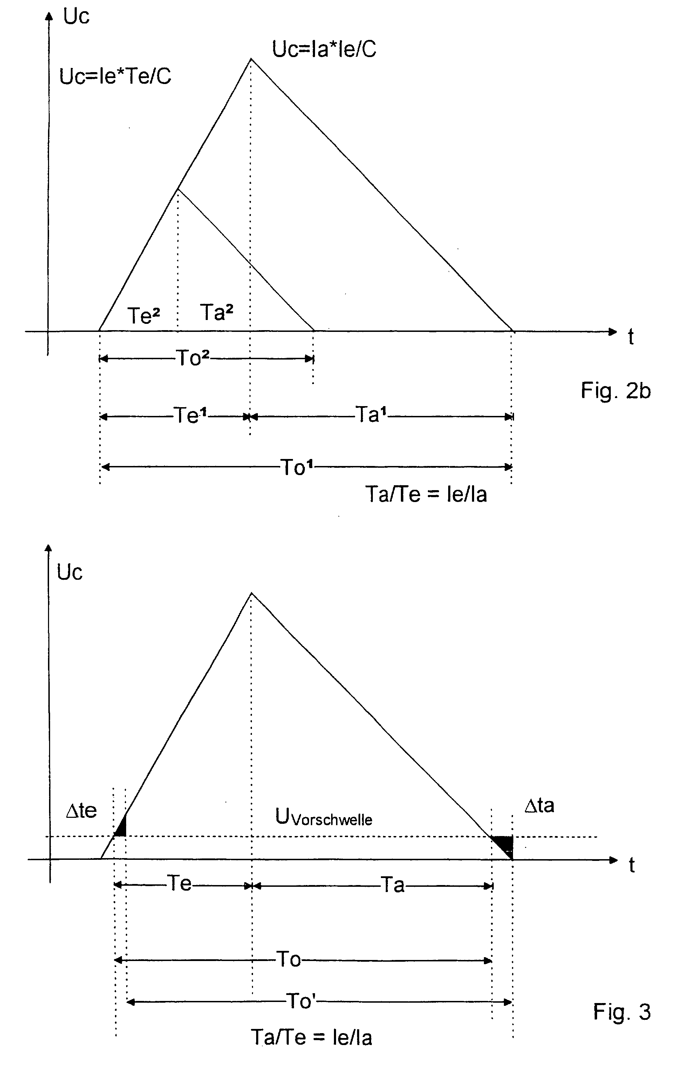

Elektronische Verfahren zur Zeitstreckung sind grundsätzlich bekannt. Sie arbeiten nach dem sogenannten "dual-slope" Verfahren, bei dem ein elektrischer Kondensator während des zu messenden Zeitintervalls mit einem Konstantstrom geladen und anschließend mit einem sehr viel kleineren Konstantstrom wieder entladen wird. Das Verhältnis der Konstantströme ist ein direktes Maß für die Zeitstreckung. Der Vorgang der Kondensatorauf- und -entladung ist schematisch in Figur 2 für zwei unterschiedlich lange Zeitintervalle gezeigt:
Ta ist dabei die Aufladezeit
Te ist die Entladezeit
To ist die Gesamtzeit,
wobei das Verhältnis Te/Ta dem Faktor der Zeitstreckung entspricht; es ist umgekehrt proportional zum Verhältnis der Konstantströme le/la.

Zweckmäßigerweise wird in der realen Ausführung nicht die Entladezeit Te gemessen, sondern die Gesamtzeit To. Dadurch vereinfacht sich die elektronische Schaltung in der Weise, daß nur ein Schwellenkomparator für die Messung benötigt wird. Die unterschiedliche Schaltverzögerung des Komparators aufgrund der unterschiedlichen Steilheit der Startflanke und der Stoppflanke kann, wie in Figur 3 dargestellt, durch eine geringe Vorspannung U_{Vorschwelle} am Komparator kompensiert werden.

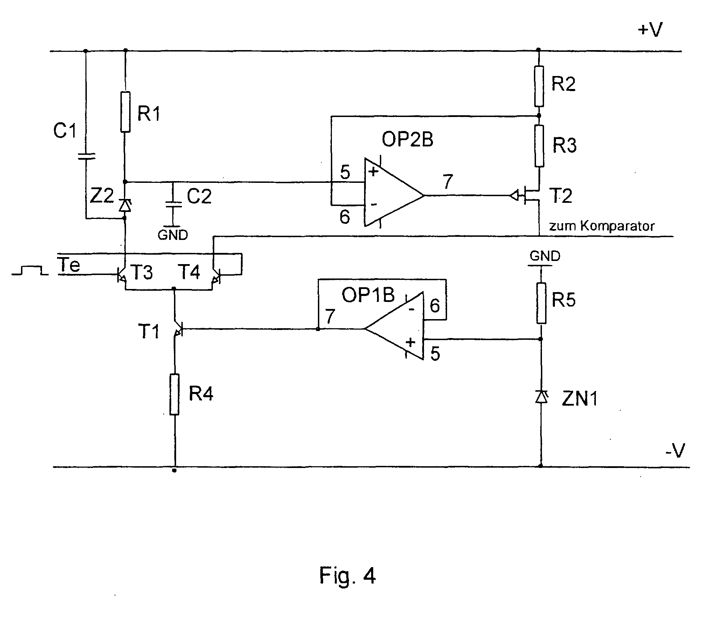

Die Genauigkeit der Zeitstreckung hängt ganz wesentlich von den Konstantströmen ab. Da normalerweise keine interne Kaliberierung für die Zeitstreckung erfolgt, wird in einer vorteilhaften Ausführungsform der Entladestrom von Aufladestrom abgeleitet. Das geschieht in Form eines sogenannten Stromspiegels, wie er beispielhaft in Figur 4 gezeigt ist. Hier besteht der Stromschalter aus den emittergekoppelten Transistoren T3 und T4. Der Ladestrom wird von einer Konstantstromquelle, bestehend aus einer Spannungsreferenz ZN1, dem Operationsverstärker OP1B und dem Tranistor T1 erzeugt. Der Entladestrom wird vom Stromspiegel, bestehend aus der Zener-Diode Z2, dem Kondensator C2, dem Operationsverstärker OP2B und dem Transistor T2 erzeugt. Die Stromspiegelschaltung sorgt dafür, daß bei eine Veränderung des Aufladestroms beispielsweise durch Umwelteinflüsse oder durch Alterung der Entladestrom im selben Maße verändert wird. Dadurch bleibt die Zeitstreckung von der Stromänderung unberührt.

## Patentansprüche

1. Verfahren zur Richtungserkennung von gepulsten Laserstrahlen nach dem Zeitintervallmeßprinzip, wobei die Einfallsrichtung als Lichtlaufzeit in unterschiedlich langen Glasfasern (L1,L2) zwischen einer Empfangsoptik (o) und einem Detektor (D1,D2) mittels einer digitalen Zeitintervallmeßschaltung gemessen wird, **dadurch gekennzeichnet, daß** das richtungbestimmende Zeitintervall (To) vor der Digitalisierung elektronisch gestreckt wird.

2. Verfahren nach Anspruch 1, **dadurch gekennzeichnet, daß** die Zeitstreckung durch Auf- und Entladung eines Kondensators mit definierten Konstantströmen erfolgt.

3. Verfahren nach Anspruch 1 und 2, **dadurch gekennzeichnet, daß** als Meßgröße das Gesamtzeitintervall der Auf- und Entladung des Konsators verwendet wird.

4. Verfahren nach einem der vorhergehenden Ansprüche, **dadurch gekennzeichnet, daß** an einem Komparator eine Vorschwelle so eingestellt wird, daß Zeitverzögerungen im Komparatorschaltvorgang durch die unterschiedlichen Flankensteilheiten kompensiert werden.

5. Verfahren nach Anspruch 1 und 2, **dadurch gekennzeichnet, daß** mittels einer Stromspiegelschaltung der Entladestrom vom Ladestrom abgeleitet wird, so daß Ladestromänderungen automatisch kompensiert werden.

## Claims

1. Method and apparatus for identification of, the direction of pulsed laser beams using the time interval measurement principle, with the incidence being measured as the light propagation time in glass fibres (61, 62) of different length between receiving optics (O) and a detector (D1, D2) by means of a digital time interval measurement circuit, **characterized in that** the direction-determining time interval (T0) is electronically extended before the digitisation process.

2. Method according to Claim 1, **characterized in that** the time extension is carried out by charging and discharging the capacitor with defined constant currents.

3. Method according to Claims 1 and 2, **characterized in that** the total time interval for charging and discharging the capacitor is used as the measurement variable.

4. Method according to one of the preceding claims, **characterized in that** an initial threshold is set on a comparator, such that time delays in the comparator switching process are compensated for by the different edge gradients.

5. Method according to Claims 1 and 2, **characterized in that** the discharge current is derived from the charging current by means of a current mirror circuit such that charging current changes are compensated for automatically.

## Revendications

1. Méthode pour la reconnaissance de la direction de faisceaux de lasers pulsés selon le principe de mesure d'intervalles de temps, la direction d'incidence étant mesurée sous la forme de la durée de trajet de la lumière dans des fibres de verre de différentes longueurs (L1, L2) entre une optique de réception (O) et un détecteur (D1, D2) au moyen d'un circuit numérique de mesure d'intervalles de temps, **caractérisée en ce que** l'intervalle de temps (T0) déterminant la direction est allongé électroniquement avant la numérisation.

2. Méthode selon la revendication 1, **caractérisée en ce que** l'allongement temporel s'effectue par charge et décharge d'un condensateur avec des courants constants définis.

3. Méthode selon la revendication 1 et 2, **caractérisée en ce que** l'ensemble de l'intervalle de temps de charge et de décharge du condensateur est utilisé comme grandeur de mesure.

4. Méthode selon une des revendications précédentes, **caractérisée en ce qu'**on règle un seuil sur un comparateur de manière à compenser les retards dans le processus de commutation du comparateur par les pentes différentes des flancs.

5. Méthode selon la revendication 1 et 2, **caractérisée en ce que** le courant de décharge dérive du courant de charge au moyen d'un circuit miroir de courant de manière à compenser automatiquement les variations de courant de charge.
